(19) Europäisches Patentamt
European Patent Office
Office européen des brevets

(11) **EP 3 753 977 B1**

(12) **EUROPEAN PATENT SPECIFICATION**

(45) Date of publication and mention
of the grant of the patent:
**18.06.2025   Bulletin 2025/25**

(21) Application number: **19754031.3**

(22) Date of filing: **15.02.2019**

(51) International Patent Classification (IPC):
***C08J 11/24*** *(2006.01)*

(52) Cooperative Patent Classification (CPC):
**C08J 11/24;** C08J 2319/00; Y02W 30/62

(86) International application number:
**PCT/JP2019/005583**

(87) International publication number:
**WO 2019/160088 (22.08.2019 Gazette 2019/34)**

(54) **RUBBER COMPOSITION PRODUCTION METHOD**

KAUTSCHUKZUSAMMENSETZUNGHERSTELLUNGSVERFAHREN

PROCÉDÉ DE PRODUCTION DE COMPOSITION DE CAOUTCHOUC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **15.02.2018   JP 2018025360**

(43) Date of publication of application:
**23.12.2020   Bulletin 2020/52**

(73) Proprietor: **Bridgestone Corporation**
**Chuo-Ku**
**Tokyo 104-8340 (JP)**

(72) Inventors:
• **AKUTAGAWA, Keizo**
**Tokyo 104-8340 (JP)**
• **HOJO, Masahiro**
**Tokyo 104-8340 (JP)**

• **HIRONAKA, Katsuaki**
**Tokyo 104-8340 (JP)**
• **TAGAYA, Hideyuki**
**Yonezawa-shi, Yamagata 992-8510 (JP)**
• **YAMASHITA, Daisuke**
**Yonezawa-shi, Yamagata 992-8510 (JP)**
• **USUI, Kazuki**
**Yonezawa-shi, Yamagata 992-8510 (JP)**
• **TAKAHASHI, Takuya**
**Yonezawa-shi, Yamagata 992-8510 (JP)**

(74) Representative: **Marks & Clerk LLP**
**15 Fetter Lane**
**London EC4A 1BW (GB)**

(56) References cited:
**WO-A1-98/31726          JP-A- 2000 508 026**
**JP-A- 2001 329 109      JP-A- 2002 187 976**
**JP-A- 2006 070 127      JP-A- H1 086 152**
**US-A1- 2008 139 678**

**Description**

Technical Field

The present invention relates to a method for producing a rubber composition.

Background Art

From the viewpoint of environmental protection and resource saving, a technology of regenerating and reusing crosslinked rubber as a new crosslinked rubber is under investigation.

For example, PTL 1 discloses, for efficiently and easily producing a reusable liquid hydrocarbon and carbon black from a vulcanized rubber waste, a method of thermally decomposing a vulcanized rubber such as a vulcanized rubber waste in the presence of a hydrogen-donating solvent to produce a liquid hydrocarbon and carbon black.

Also disclosed are a method of devulcanizing a crosslinked rubber using 2-butanol in a temperature range of 150 to 300°C and under the condition of a pressure of 3.4 MPa or more (for example, see PTL 2), a method of devulcanizing a crosslinked rubber using an alcohol and a ketone solvent, in a temperature range of 200 to 350°C and under the condition of a pressure of 3.4 to 34 MPa (for example, see PTL 3), and a method of decomposing a vulcanized rubber using water and an organic solvent (alcohol) at a temperature not lower than the vapor pressure of each solvent, in an atmosphere of 300 psi or more including an inert gas, under a saturated vapor pressure or more and in a temperature zone of 285°C or lower (for example, see PTL 4).

Citation List

Patent Literature

PTL 1: JP 7-310076 A
PTL 2: US Patent No. 5891926
PTL 3: US Patent No. 6548560
PTL 4: US Patent No. 9458304
PTL5: WO98/31726
PTL6: US2008/139678

Summary of Invention

Technical Problem

In the method described in PTL 1, a crosslinked rubber is decomposed in a high-pressure environment, for example, as described to be "reacted under a nitrogen gas initial pressure of 20 kg/cm$^2$, at a reaction temperature of 440°C for 1 hour" in the paragraph [0033]. Also in PTLs 2 to 4, a crosslinked rubber is decomposed in a high-pressure environment, as mentioned above.

However, preparing a high-pressure environment for decomposing a crosslinked rubber is contrary to energy saving that is required these days from the viewpoint of equipment maintenance. Consequently, from the viewpoint of resource saving and energy saving, a method of obtaining a liquid hydrocarbon even under a mild condition is desired.

An object of the present invention is to provide a method for producing a rubber composition capable of producing a liquid hydrocarbon at a high yield even under a milder condition, and to thereby solve the above-mentioned problems.

Solution to Problem

<1> A rubber composition production method for obtaining a rubber composition containing a liquid hydrocarbon, including heating a crosslinked rubber in a reaction solvent containing a primary alcohol having 2 or more carbon atoms, at 0.1 to 2.0 MPa and at 300°C or lower, wherein the primary alcohol is an aliphatic alcohol having 5 to 8 carbon atoms.

<2> The rubber composition production method according to <1>, wherein the primary alcohol contains at least one of 1-heptanol and 1-octanol.

<3> The rubber composition production method according to <1> or <2>, wherein the crosslinked rubber is heated at 0.1 to 1.5 MPa.

<4> The rubber composition production method according to any one of <1> to <3>, wherein the crosslinked rubber is heated at 150 to 250°C.

<5> The rubber composition production method according to any one of <1> to <4>, wherein the crosslinked rubber is heated in an aerobic environment.

<6> The rubber composition production method according to any one of <1> to <5>, wherein the crosslinked rubber is a crosslinked product of a rubber component containing a dienic rubber in an amount of 50% by mass or more.

<7> The rubber composition production method according to any one of <1> to <6>, wherein the crosslinked rubber contains a vulcanized rubber.

Advantageous Effects of Invention

According to the present invention, there can be provided a rubber composition production method capable of producing a liquid hydrocarbon at a high yield even under a milder condition.

Description of Embodiments

The rubber composition production method of the present invention includes a step of obtaining a rubber composition containing a liquid hydrocarbon by heating a crosslinked rubber in a reaction solvent containing a primary alcohol having 2 or more carbon atoms, at 0.1 to 2.0 MPa and at 300°C or lower (hereinafter may be referred to as a "decomposition step").

The rubber composition production method of the present invention may have, in addition to the decomposition step, a separation step of extracting and separating a liquid hydrocarbon from the rubber composition.

The liquid hydrocarbon contained in the rubber composition produced according to the production method of the present invention is a rubber molecule constituting a crosslinked rubber, and varies depending on the constitution of the crosslinked rubber, and in the case where a crosslinked rubber derived from waste tires is used, the liquid hydrocarbon generally includes a natural rubber, a styrene-butadiene copolymer rubber or the like. Liquid is meant to indicate a liquid state at room temperature (25°C) and under an atmospheric pressure (0.1 MPa), or a state easily soluble in a petroleum component (alcohol, diethyl ether, tetrahydrofuran, etc.) to be a liquid state.

In the rubber composition production method of the present invention, it is considered that the bond of carbon atoms derived from a rubber molecule constituting a crosslinked rubber (carbon-carbon bond), or the bond between the carbon atom and a hetero atom (e.g., oxygen atom, sulfur atom) derived from a crosslinking agent (for example, carbon-sulfur bond) would be cleaved by heat or by a solvent effect to create a radical and/or a new bond. With that, it is considered that, by the highly-reactive radical species to form through the cleavage, the hydrogen atom released from a primary alcohol having 2 or more carbon atoms is drawn to stop the radical reaction. In this reaction, immediately after formation of the reactive carbon radial, hydrogen is supplied to the radial and therefore the radicals could hardly bond to each other, and recombination could hardly occur in the cleaved carbon-carbon bond and carbon sulfur bond.

Hereinunder the rubber composition production method of the present invention is described in detail.

[Crosslinked rubber]

The crosslinked rubber is a crosslinked product of a rubber component, and the rubber component of a raw material for the crosslinked rubber may be any of a dienic rubber or a non-dienic rubber.

The dienic rubber includes at least one selected from the group consisting of a natural rubber (NR) and a synthetic dienic rubber.

Examples of the synthetic dienic rubber include a polyisoprene rubber (IR), a styrene-butadiene copolymer rubber (SBR), a polybutadiene rubber (BR), an ethylene-propylene-diene rubber (EPDM), a chloroprene rubber (CR), a halogenobutyl rubber, and an acrylonitrile-butadiene rubber (NBR).

Examples of the non-dienic rubber include a butyl rubber, an ethylene-propylene rubber, a urethane rubber, a silicone rubber, and an acrylic rubber.

One alone or two or more of these rubber components may be used either singly or as combined.

Among the above, in general, a dienic rubber is used for rubber products such as tires, and therefore, in this, the rubber component preferably contains a dienic rubber in an amount of 50% by mass or more, more preferably contains a dienic rubber in an amount of 70% by mass or more, even more preferably 90% by mass or more. Also preferably, the dienic rubber is at least one selected from a natural rubber, a polyisoprene rubber, and a styrene-butadiene copolymer rubber.

The crosslinking agent for the rubber component is not specifically limited, and examples thereof include a sulfur-based crosslinking agent, an organic peroxide-based crosslinking agent, an inorganic crosslinking agent, a polyamine-based crosslinking agent, a resin-based crosslinking agent, a sulfur compound-based crosslinking agent, and an oxime-nitrosoamine-based crosslinking agent.

For the rubber component for tires, in general, a sulfur-based crosslinking agent (vulcanizing agent) is used, and therefore, the crosslinked rubber preferably contains a vulcanized product vulcanized with a vulcanizing agent, that is, a vulcanized rubber.

It is considered that, by heating a vulcanized rubber in the presence of a reaction solvent containing a primary alcohol having 2 or more carbon atoms, at 0.1 to 2.0 MPa and at 300°C or lower, the carbon-sulfur bond mainly constituting the molecular structure of the vulcanized rubber is cleaved by heat or cleaved by interchange reaction owing to the solvent effect with the result that the hydrogen atom released from the primary alcohol having 2 or more carbon atoms would be drawn by the highly-reactive radical species formed through the bond cleavage to stop the radical reaction.

The content of the vulcanized rubber in the crosslinked rubber is preferably 50% by mass or more, more preferably 70% by mass or more, even more preferably 90% by mass or more, and especially preferably, the crosslinked rubber is a vulcanized rubber (that is, the content of the vulcanized rubber therein is 100% by mass).

(Filler)

The crosslinked rubber may contain a filler.

In general, tires contain a reinforcing filler such as carbon black or silica for the purpose of improving various functions such as durability and abrasion resistance of tires.

As the filler, any one of silica and carbon black may be used, or both of silica and carbon black may be used.

Silica is not specifically limited, and general-grade silica or specific silica surface-treated with a silane coupling agent may be used depending on the intended purpose. As silica, for example, a wet method silica is preferably used.

Carbon black is not also specifically limited, and may be appropriately selected depending on n the intended purpose. As carbon black, FEF, SRF, HAF, ISAF, or SAF-grade carbon black is preferred.

The content of the filler in the crosslinked rubber is preferably 40 to 100 parts by mass relative to 100 parts by mass of the rubber component, more preferably 50 to 90 parts by mass.

The crosslinked rubber may be a crosslinked product produced by crosslinking a rubber composition optionally containing a blending agent generally used in the industrial field of rubber, for example, a softener, stearic acid, an antiaging agent, zinc oxide, and a vulcanization accelerator, in addition to the rubber component and the filler. Tires generally contain a vulcanized rubber produced by vulcanizing a rubber composition containing any such blending agent.

[Reaction solvent]

The reaction solvent contains a primary alcohol having 2 or more carbon atoms.

The primary alcohol is an aliphatic alcohol having 5 to 8 carbon atoms, and examples thereof include a saturated or unsaturated aliphatic alcohol.

The aliphatic alcohol may be linear, branched or cyclic, and examples thereof include 1-pentanol, 2-methyl-1-pentanol, 1-hexanol, 1-heptanol, and 1-octanol.

One alone or two or more kinds of primary alcohols having 2 or more carbon atoms may be used either singly or as mixed.

Among the above, from the viewpoint of the ability thereof to highly decompose crosslinked rubber and from the viewpoint of recovery rate of liquid hydrocarbon, an aliphatic alcohol having 5 to 8 carbon atoms is used. Also preferably, the aliphatic alcohol is a linear or branched saturated aliphatic alcohol, and is more preferably a linear saturated aliphatic alcohol, even more preferably 1-heptanol and 1-octanol.

The reaction solvent may be composed of a primary alcohol having 2 or more carbon atoms, or may contain any other solvent in addition to the primary alcohol having 2 or more carbon atoms, but from the viewpoint of increasing the yield of liquid hydrocarbon, preferably, the reaction solvent contains a primary alcohol having 2 or more carbon atoms as the main component. The main component means that the content of the primary alcohol having 2 or more carbon atoms is more than 50% by volume, and the content of the primary alcohol having 2 or more carbon atoms in the reaction solvent is preferably 70% by volume or more, more preferably 90% by volume or more, and may be 100% by volume or more.

In the decomposition step, preferably, the reaction solvent is used in such a range that the ratio of the mass (Ws) of the reaction solvent to the mass (Wg) of the crosslinked rubber (Ws/Wg) falls preferably within a range of 0.5/1 to 5/1, more preferably 1/1 to 3/1.

When the reaction solvent is used within the above-mentioned range, solvolysis reaction can be promoted more, and sufficient hydrogen atom can be supplied to the crosslinked rubber and recombination of radicals formed in thermal decomposition can be prevented to efficiently decompose the crosslinked rubber.

[Reaction condition in decomposition step]

(Pressure)

In the decomposition step, the pressure to be given to the crosslinked rubber and the reaction solvent is 0.1 to 2.0 MPa. When the pressure is less than 0.1 MPa, the crosslinked rubber could hardly be decomposed, and the pressure of 2.0 MPa or less is excellent in resource saving and energy saving.

The pressure in the decomposition step is preferably 0.1 to 1.5 MPa.

(Temperature)

In the decomposition step, the crosslinked rubber and the reaction solvent are heated at 300°C or lower.

The heating temperature of 300°C or lower is excellent in energy saving and can prevent yield reduction owing to side reaction. When the crosslinked rubber is heated at a lower temperature, the reaction involving the solvent can be prioritized to decompose the crosslinked rubber. Preferably, the heating temperature is 150°C or higher, more preferably 175 to 250°C.

(Atmosphere)

The reaction atmosphere in the decomposition step at 300°C or lower is not specifically limited, and the reaction can be carried out in a gaseous atmosphere of an inert gas such as a nitrogen gas (hereinafter simply referred to as an inert gas atmosphere), or may be carried out in a gaseous atmosphere of air (hereinafter simply referred to as an air atmosphere), or may be carried out in a mixed gas atmosphere of air and an inert gas. In the case of using an inert gas, two or more kinds of inert gases may be used as a mixture thereof.

From the viewpoint of carrying out decomposition of the crosslinked rubber or from the viewpoint of attaining energy saving, preferably, the crosslinked rubber is heated in an aerobic environment, that is, in an oxygen-containing atmosphere, more preferably heated in a gaseous atmosphere containing air, even more preferably in an air atmosphere.

[Separation step]

The separation step includes filtering the rubber composition containing a liquid hydrocarbon obtained in the decomposition step to separate it into a liquid component containing a liquid hydrocarbon and a solid component, then mixing the liquid component with an organic solvent, and extracting and separating the liquid hydrocarbon.

The organic solvent to be used for extraction separation includes diethyl ether, and tetrahydrofuran (THF).

In the decomposition step, the crosslinked rubber is heated in a reaction solvent containing a primary alcohol having 2 or more carbon atoms, at 0.1 to 2.0 MPa and at 300°C or lower to give a rubber composition containing a liquid hydrocarbon. The rubber composition generally contains a solid fraction having remained therein without being decomposed, in addition to the liquid product containing a liquid hydrocarbon obtained through thermal decomposition of the crosslinked rubber. Further, in the case where a waste tire is used as the crosslinked rubber, the solid fraction also contains a filler since the tire generally contains a filler

A natural rubber before vulcanization (raw rubber) generally has a weight-average molecular weight (Mw) of about 1,000,000 and a number-average molecular weight (Mn) of about 300,000, and when Mw and Mn of the resultant liquid hydrocarbon are nearer to these values, it means that a rubber having a molecular chain close to that of the raw material rubber can be obtained. Preferably, Mw of the liquid hydrocarbon is nearer to 1,000,000, and Mn thereof is nearer to 300,000. Mw and Mn of the liquid hydrocarbon can be measured, for example, through gel permeation chromatography (GPC).

The liquid hydrocarbon produced according to the above-mentioned method can be used for regeneration of a crosslinked rubber.

For regeneration of a crosslinked rubber, not only the liquid hydrocarbon alone is used as a raw material but also the liquid hydrocarbon in a state mixed with the solid fraction obtained in the decomposition step, that is, the rubber composition as it is without separating the liquid hydrocarbon from the rubber composition obtained in the decomposition step can be used as a raw material for a regenerated rubber.

Examples

Hereinunder the present invention is described in more detail with reference to Examples given below, but these Examples are for the purpose of exemplifying the present invention and are not whatsoever to restrict the present invention.

<Liquid hydrocarbon production A>

[Example 1]

(Decomposition step)

0.1 g of small pieces of vulcanized rubber, as cut from waste tires to be in a size of about 1 mm, and 1 mL of 1-heptanol were put into a tubing pump autoclave having an inner volume of 10 mL (from Nitto Koatsu K.K.). The autoclave was purged with an argon (Ar) gas, and sealed up, and the autoclave was put into an image furnace (EPDR-16K, from Isuzu Seisakusho K.K.), and the contents therein were heated at 200°C and 0.1 MPa. The temperature is the temperature inside the image furnace, and the pressure is one measured with a pressure gauge set inside the autoclave for which the reaction was carried out under the same condition using a 100-mL autoclave. The contents in the autoclave were heated up to 200°C and kept heated as such at 200°C for 6 hours. After the heating, the autoclave was put into water at room temperature (25°C), and the reaction product was rapidly cooled to room temperature.

(Separation step)

The reaction product obtained in the decomposition step is filtered under suction through a glass filter to separate it into a liquid product and a solid residue. Next, the liquid product is mixed with diethyl ether (processing solvent), and the organic substance of a decomposition product dissolved in diethyl ether was separated by extraction. Diethyl ether was removed from the organic substance of a decomposition product to isolate the organic substance of a decomposition product.

[Reference Examples and Examples 2 to 13 and Comparative Examples 1 to 3)

(Decomposition step)

A decomposition step was carried out in the same manner as in Example 1 except that the inner volume of the autoclave was changed to the vessel size shown in Tables 1 to 3, and the kind of the reaction solvent, the purging gas in the autoclave (reaction atmosphere), the heating temperature, the pressure and the heating time were changed to the conditions shown in Tables 1 to 3.

In Example 11, the autoclave with an air atmosphere was pressurized with a nitrogen gas to form a mixed gas of air and a nitrogen gas ($N_2$) therein.

In Comparative Example 3, the autoclave with an argon atmosphere was pressurized with a nitrogen gas to form a mixed gas of an argon gas and a nitrogen gas therein.

(Separation step)

In Comparative Examples 1 and 2 and Example 2, the reaction product obtained in the decomposition step was processed in the same manner as in Example 1 to give an organic substance of a decomposition product.

In Reference Examples and Examples 3 to 13 and Comparative Example 3, the reaction product obtained in the decomposition step was processed in the same manner as in Example 1 except that the processing solvent was changed to THF (tetrahydrofuran) to give an organic substance of a decomposition product.

<Analysis A of organic substance of decomposition product>

The mass of the solid residue obtained in the separation step in Examples and Comparative Examples was weighed (the mass is referred to as a [g]), and from the mass (referred to as b [g]) of the vulcanized rubber processed in the decomposition step and the mass of the solid residue, a solid residue recovery rate was calculated according to the following equation.

$$\text{Solid residue recovery rate } (\%) = (a/b) \times 100$$

Next, from the resultant solid residue recovery rate, a solubilization rate was calculated according to the following equation.

$$\text{Solubilization rate } (\%) = 100 \text{ - solid residue recovery rate } (\%)$$

A larger solubilization rate indicates a higher decomposition efficiency and means a higher yield of the product, liquid hydrocarbon. The results are shown in Tables 1 to 3. For comparison, the results in Example 8 are shown also in Table 3. Abnormal values that would be caused by mistakes in experiments or measurements are not reflected in the results.

Table 1

| | | Comparative Example 1 | Comparative Example 2 | Example 1 | Example 2 | Example 3 |
|---|---|---|---|---|---|---|
| Decomposition Step | Temperature [°C] | 200 | 200 | 200 | 200 | 200 |
| | Pressure [MPa] | 0.1 | 0.1 | 0.1 | 0.1 | 0.1 |
| | Reaction Atmosphere | Ar | Ar | Ar | Air | Air |
| | Time [hour] | 6 | 6 | 6 | 6 | 6 |
| | Reaction Solvent | Methanol | Tetralin | 1-Heptanol | 1-Heptanol | 1-Heptanol |
| | Vessel Size [mL] | 10 | 10 | 10 | 10 | 10 |
| Separation Step | Processing Solvent | Diethyl Ether | Diethyl Ether | Diethyl Ether | Diethyl Ether | THF |
| | Solubilization Rate [%] | 42.7 | 41.4 | 66.8 | 51.5 | 47.9 |

Table 2

| | | Reference Example 4 | Reference Example 5 | Example 6 | Example 7 | Example 8 | Example 9 | Reference Example 10 |
|---|---|---|---|---|---|---|---|---|
| Decomposition Step | Temperature [°C] | 200 | 200 | 200 | 200 | 200 | 200 | 200 |
| | Pressure [MPa] | 0.1 | 0.1 | 0.1 | 0.1 | 0.1 | 0.1 | 0.1 |
| | Reaction Atmosphere | Air | Air | Air | Air | Air | Air | Air |
| | Time [hour] | 2 | 2 | 2 | 2 | 2 | 2 | 2 |
| | Reaction Solvent | 1-Propanol | 1-Butanol | 1-Pentanol | 1-Hexanol | 1-Heptanol | 1-Octanol | 1-Decanol |
| | Vessel Size [mL] | 10 | 10 | 10 | 10 | 10 | 10 | 10 |
| Separation Step | Processing Solvent | THF | THF | THF | THF | THF | THF | THF |
| | Solubilization Rate [%] | 26.3 | 51.7 | 57.0 | 60.6 | 64.3 | 31.6 | 29.3 |

Table 3

| | | Example 11 | Comparative Example 3 | Example 12 | Example 8 | Example 13 |
|---|---|---|---|---|---|---|
| Decomposition Step | Temperature [°C] | 200 | 200 | 150 | 200 | 250 |
| | Pressure [MPa] | 0.1 | 2.1 | 0.1 | 0.1 | 0.1 |
| | Reaction Atmosphere | Air + Nitrogen | Ar + Nitrogen | Air | Air | Air |
| | Time [hour] | 2 | 2 | 2 | 2 | 2 |
| | Reaction Solvent | 1-Heptanol | 1-Heptanol | 1-Heptanol | 1-Heptanol | 1-Heptanol |
| | Vessel Size [mL] | 100 | 100 | 10 | 10 | 10 |
| Separation Step | Processing Solvent | THF | THF | THF | THF | THF |
| | Solubilization Rate [%] | 37.6 | 21.1 | 25.0 | 64.3 | 76.8 |

<Liquid hydrocarbon production B>

[Reference Examples and Examples 14 to 20 and Comparative Example 4]

A decomposition step was carried out in the same manner as in Example 1 except that the inner volume of the autoclave was changed to the vessel size shown in Table 4, and the kind of the reaction solvent, the purging gas in the autoclave (reaction atmosphere), the heating temperature, the pressure and the heating time were changed to the conditions shown in Table 4. Next, the reaction product obtained in the decomposition step was processed in the same manner as in Example 1 to give an organic substance of a decomposition product.

<Analysis B of organic substance of decomposition product>

The organic substance of a decomposition product obtained in the separation step in Reference Examples and Examples 14 to 20 and Comparative Example 4 was dissolved in tetrahydrofuran and analyzed through gel permeation chromatography (GPC). From the analysis results, the solubility rate, the weight-average molecular weight (Mw) and the number-average molecular weight (Mn) of the organic substance of a decomposition product were calculated, and the results are shown in Table 4. From the measured areal ratio, the polymer mass (the mass is referred to as a' [g]) in the organic substance of a decomposition product was determined. The isoprene amount in the waste tires of a raw material rubber was determined through TG-DTA. Specifically, the polymer mass in the raw material rubber (the mass is referred to as b' [g]) was measured using a thermogravimetry-differential thermal analysis (TG-DTA) device (trade name "TG/DTA6200" from Seiko Instruments Corporation) according to JIS K 6226-1:2003. The polymer solubilization rate was determined from the resultant a' and b', according to the following equation.

$$\text{Solid residue recovery rate } (\%) = (a'/b') \times 100$$

$$\text{Solubilization rate } (\%) = 100 \text{ - solid residue recovery rate } (\%)$$

Conditions for the GPC measurement are as follows.

Column: TSKgel GMHXL, from Tosoh Corporation
Eluent: tetrahydrofuran
Flow rate: 1 mL/min
Temperature: 40°C
Detector: RI

A larger solubilization rate indicates a higher decomposition efficiency and means a higher yield of the product, liquid hydrocarbon. Larger Mn and Mw mean that a decomposition rubber having a higher molecular weight was obtained. As described above, a natural rubber (raw rubber) before vulcanization generally has Mw of about 1,000,000 (1000 [$\times$ $10^3$]), and Mn of about 300,000 (300 [$\times$ $10^3$]). Mn and Mw in Table 4 that are nearer to these numerical values mean that a rubber having a molecular chain near to that of a raw material rubber was obtained.

Table 4

| | | Comparative Example 4 | Reference Example 14 | Reference Example 15 | Example 16 |
|---|---|---|---|---|---|
| Decomposition Step | Temperature [°C] | 200 | 200 | 200 | 200 |
| | Pressure [MPa] | 0.1 | 0.1 | 0.1 | 0.1 |
| | Reaction Atmosphere | Air | Air | Air | Air |
| | Time [hour] | 2 | 2 | 2 | 2 |
| | Reaction Solvent | Methanol | 1-Propanol | 1-Butanol | 1-Pentanol |
| | Vessel Size [mL] | 10 | 10 | 10 | 10 |
| Separation Step | Processing Solvent | THF | THF | THF | THF |
| | Solubilization Rate [%] | 21.0 | 23.4 | 27.5 | 34.1 |
| | Mn [$\times10^3$] | 20.6 | 21.4 | 21.9 | 31.8 |
| | Mw [$\times10^3$] | 83.8 | 110.9 | 126.3 | 101.1 |
| | | Example 17 | Example 18 | Example 19 | Reference Example 20 |
| Decomposition Step | Temperature [°C] | 200 | 200 | 200 | 200 |
| | Pressure [MPa] | 0.1 | 0.1 | 0.1 | 0.1 |
| | Reaction Atmosphere | Air | Air | Air | Air |
| | Time [hour] | 2 | 2 | 2 | 2 |
| | Reaction Solvent | 1-Hexanol | 1-Heptanol | 1-Octanol | 1-Decanol |
| | Vessel Size [mL] | 10 | 10 | 10 | 10 |
| Separation Step | Processing Solvent | THF | THF | THF | THF |
| | Solubilization Rate [%] | 30.6 | 39.9 | 43.4 | 28.0 |
| | Mn [$\times10^3$] | 31.8 | 33.2 | 31.4 | 52.4 |
| | Mw [$\times10^3$] | 111.5 | 136.1 | 136.5 | 145.4 |

As known from Tables 1 to 3, in Examples, a liquid hydrocarbon can be produced at a high yield even under mild heating conditions of 0.1 to 2.0 MPa and 300°C or lower. In Reference Examples and Examples 4 to 13, the reaction time in the decomposition step was 1/3 of that in Comparative Examples 1 and 2. Despite of the condition, even in Example 12 in which the solubilization rate was lowest, the solubilization rate was larger than a half of the solubilization rate in Comparative Examples 1 and 2. From these, it is known that a liquid hydrocarbon can be obtained at a high yield in these Examples.

In addition, as known from Table 4, in Reference Examples and Examples 14 to 20, Mw is more than 100,000, and it is known that in these Examples, a decomposition product having a higher molecular weight than in Comparative Example 4 was obtained.

**Claims**

1. A rubber composition production method for obtaining a rubber composition containing a liquid hydrocarbon, comprising heating a crosslinked rubber in a reaction solvent containing a primary alcohol having 2 or more carbon atoms, at 0.1 to 2.0 MPa and at 300°C or lower,

wherein the primary alcohol is an aliphatic alcohol having 5 to 8 carbon atoms.

2. The rubber composition production method according to claim 1, wherein the primary alcohol contains at least one of 1-heptanol and 1-octanol.

3. The rubber composition production method according to claim 1 or 2, wherein the crosslinked rubber is heated at 0.1 to 1.5 MPa.

4. The rubber composition production method according to any one of claims 1 to 3, wherein the crosslinked rubber is heated at 150 to 250°C.

5. The rubber composition production method according to any one of claims 1 to 4, wherein the crosslinked rubber is heated in an aerobic environment.

6. The rubber composition production method according to any one of claims 1 to 5, wherein the crosslinked rubber is a crosslinked product of a rubber component containing a dienic rubber in an amount of 50% by mass or more.

7. The rubber composition production method according to any one of claims 1 to 6, wherein the crosslinked rubber contains a vulcanized rubber.

**Patentansprüche**

1. Verfahren zur Herstellung einer Kautschukzusammensetzung zum Erlangen einer Kautschukzusammensetzung, die einen flüssigen Kohlenwasserstoff enthält, umfassend das Erhitzen eines vernetzten Kautschuks in einem Reaktionslösungsmittel, das einen primären Alkohol mit 2 oder mehr Kohlenstoffatomen enthält, bei 0,1 bis 2,0 MPa und bei 300 °C oder weniger,
wobei der primäre Alkohol ein aliphatischer Alkohol mit 5 bis 8 Kohlenstoffatomen ist.

2. Verfahren zur Herstellung einer Kautschukzusammensetzung nach Anspruch 1, wobei der primäre Alkohol mindestens eines von 1-Heptanol und 1-Octanol enthält.

3. Verfahren zur Herstellung einer Kautschukzusammensetzung nach Anspruch 1 oder 2, wobei der vernetzte Kautschuk bei 0,1 bis 1,5 MPa erhitzt wird.

4. Verfahren zur Herstellung einer Kautschukzusammensetzung nach einem der Ansprüche 1 bis 3, wobei der vernetzte Kautschuk bei 150 bis 250 °C erhitzt wird.

5. Verfahren zur Herstellung einer Kautschukzusammensetzung nach einem der Ansprüche 1 bis 4, wobei der vernetzte Kautschuk in einer aeroben Umgebung erhitzt wird.

6. Verfahren zur Herstellung einer Kautschukzusammensetzung nach einem der Ansprüche 1 bis 5, wobei der vernetzte Kautschuk ein vernetztes Produkt aus einer Kautschukkomponente ist, die einen Dien-Kautschuk in einer Menge von 50 Massenprozent oder mehr enthält.

7. Verfahren zur Herstellung einer Kautschukzusammensetzung nach einem der Ansprüche 1 bis 6, wobei der vernetzte Kautschuk einen vulkanisierten Kautschuk enthält.

**Revendications**

1. Procédé de production d'une composition de caoutchouc permettant d'obtenir une composition de caoutchouc contenant un hydrocarbure liquide, comprenant le chauffage d'un caoutchouc réticulé dans un solvant de réaction contenant un alcool primaire possédant 2 atomes de carbone ou plus, à une pression de 0,1 à 2,0 MPa et à 300 °C ou moins,
dans lequel l'alcool primaire est un alcool aliphatique possédant 5 à 8 atomes de carbone.

2. Procédé de production d'une composition de caoutchouc selon la revendication 1, dans lequel l'alcool primaire contient au moins l'un du 1-heptanol et du 1-octanol.

3. Procédé de production d'une composition de caoutchouc selon la revendication 1 ou 2, dans lequel le caoutchouc réticulé est chauffé à 0,1 à 1,5 MPa.

4. Procédé de production d'une composition de caoutchouc selon l'une quelconque des revendications 1 à 3, dans lequel le caoutchouc réticulé est chauffé à 150 à 250 °C.

5. Procédé de production d'une composition de caoutchouc selon l'une quelconque des revendications 1 à 4, dans lequel le caoutchouc réticulé est chauffé dans un milieu aérobie.

6. Procédé de production d'une composition de caoutchouc selon l'une quelconque des revendications 1 à 5, dans lequel le caoutchouc réticulé est un produit réticulé d'un composant de caoutchouc contenant un caoutchouc diénique en une quantité égale ou supérieure à 50 % en masse.

7. Procédé de production d'une composition de caoutchouc selon l'une quelconque des revendications 1 à 6, dans lequel le caoutchouc réticulé contient un caoutchouc vulcanisé.

## REFERENCES CITED IN THE DESCRIPTION

**Patent documents cited in the description**

- JP 7310076 A
- US 5891926 A
- US 6548560 B
- US 9458304 B
- WO 9831726 A
- US 2008139678 A